# EUROPÄISCHE PATENTSCHRIFT

(11) **EP 2 495 126 B1**
(45) Veröffentlichungstag und Bekanntmachung des Hinweises auf die Patenterteilung: **18.11.2015**
(21) Anmeldenummer: 12157711.8
(22) Anmeldetag: 01.03.2012
(51) Int. Cl.: B60N 2/50, B62D 33/06, B60G 99/00

(54) **Hebelmechanismus für Dämpferverstellung für Horizontalfederung**
Lever mechanism for damper adjustment for horizontal suspension
Mécanisme de levier pour réglage de la vapeur pour suspension horizontale

(30) Priorität: 04.03.2011 DE 102011013122
(43) Veröffentlichungstag der Anmeldung: 05.09.2012
(73) Patentinhaber: GRAMMER AG, 92224 Amberg (DE)
(72) Erfinder: Haller, Erwin, 92262 Birgland (DE); Kolb, Jens, 92281 Königstein (DE)
(74) Vertreter: Hannke, Christian

(56) Entgegenhaltungen:
- WO-A1-2007/058572
- DE-A1- 10 206 223
- DE-A1-102008 063 812
- FR-A1- 2 418 721
- JP-A- H09 150 660
- US-A- 2 590 859

## Beschreibung

Die Erfindung betrifft zum einen eine Fahrzeugschwingungsvorrichtung mit zwei relativ zueinander beweglich angeordneten Fahrzeugteilen, bei welcher eines der beiden Fahrzeugteile gegenüber dem weiteren der beiden Fahrzeugteile in Fahrzeuglängsrichtung und/oder in Fahrzeugbreitenrichtung im Wesentlichen horizontal schwingbar gelagert ist.

Die Erfindung betrifft zum anderen ein Verfahren zum Positionieren eines im Wesentlichen horizontal schwingbaren Fahrzeugteils der Fahrzeugschwingungsvorrichtung in einer Ruheposition bzw. in die Ruheposition hinein.

Darüber hinaus betrifft die Erfindung eine Verwendung der Fahrzeugschwingungsvorrichtung.

Gattungsgemäße Fahrzeugschwingungsvorrichtungen werden im Speziellen an horizontal schwingend gelagerten Fahrzeugsitzen und/oder Fahrgastzellen bzw. Fahrzeugkabinen eingesetzt. Derartige Fahrzeugschwingungsvorrichtungen verbinden hierbei ein fahrzeugseitiges Unterteil horizontal federnd mit einem dem Fahrzeugsitz bzw. der Fahrgastzelle zugewandten Oberteil, sodass das Oberteil gegenüber dem Unterteil speziell bei einer horizontalen Schwingungsanregung beispielsweise nach vorne schwingen kann. Hierdurch kann die horizontal stattfindende Schwingung des Oberteils federnd abgefangen werden. Eine derartige horizontale Schwingung kann beispielsweise aufgrund einer überfahrenen Fahrbahnunebenheit angeregt werden. Um auch vertikal eingeleitete Schwingungen zu beherrschen, können kumulativ separate Vertikalfederungseinrichtungen an der Fahrzeugschwingungsvorrichtung vorgesehen sein, auf die vorliegend jedoch nicht weiter eingegangen werden soll. Jedenfalls ist es bei herkömmlichen Fahrzeugschwingungsvorrichtungen nachteilig, dass insbesondere die angeregten Horizontalschwingungen nur vernachlässigbar gering abgedämpft werden. Hierdurch kann es zu einem kritischen Aufschaukeln des horizontal schwingbaren Oberteils kommen, wenn eine Horizontalfederungseinrichtung der Fahrzeugschwingungsvorrichtung eine entsprechend große Federkraft aufweist. Ist die Federkraft hingegen zu gering ausgelegt, besteht die Gefahr, dass das horizontal schwingbare Oberteil an Endanschlägen der Horizontalfederungseinrichtung anschlägt und hierbei ruckartig stoppt. Beide Effekte sind unerwünscht.

Die WO2007/058572 zeigt eine Fahrzeugschwingungsvorrichtung gemäß des Oberbegriffs des Anspruchs 1.

Es ist Aufgabe der Erfindung derartige Fahrzeugschwingungsvorrichtungen weiterzuentwickeln, um insbesondere diese Nachteile zu vermeiden.

Die Aufgabe der Erfindung wird von einer Fahrzeugschwingungsvorrichtung nach Anspruch 1 mit zwei relativ zueinander beweglich angeordneten Fahrzeugteilen gelöst.

Bevorzugt ist das verwendete Getriebe als Hebelwerk ausgestaltet.

Aufgrund des erfindungsgemäßen Vorsehens des vorliegenden Getriebes, welches bevorzugt konstruktiv einfach und robust als Hebelwerk ausgestaltet ist, gelingt es in vorteilhafter Weise, die beiden Fahrzeugteile derart miteinander zu koppeln, dass der Dämpfer besonders platzsparend in die Fahrzeugschwingungsvorrichtung integriert werden kann. Insofern kann nun auch eine Horizontalschwingung des horizontal schwingbaren Fahrzeugteils über den bisher bekannten Standard gedämpft werden.

Dies ist insbesondere hinsichtlich eines Fahrzeugsitzes vorteilhaft, da dieser nun idealerweise Baumaße beibehalten kann wie herkömmliche Fahrzeugsitze ohne Dämpfung.

Die "Fahrzeugteile" können im Sinne der Erfindung einerseits unmittelbare Funktionsbauteile eines Fahrzeuges sein.

Hinsichtlich eines Fahrzeugsitzes kann es sich bei dem horizontal schwingbaren Fahrzeugteil um ein Oberteil eines Fahrzeugsitzgestells oder dergleichen und bei dem weiteren der beiden Fahrzeugteile um ein Unterteil des Fahrzeugsitzgestells handeln.

Insofern wird die Aufgabe der Erfindung auch von einem Fahrzeugsitz eines Fahrzeuges, insbesondere eines Kraftfahrzeuges, gelöst, der die vorliegende Fahrzeugschwingungsvorrichtung umfasst.

Darüber hinaus wird die Aufgabe der Erfindung auch von einer Fahrgastzelle bzw. Fahrzeugkabine eines Fahrzeugs, insbesondere eines Kraftfahrzeugs, gelöst, welche die vorliegende Fahrzeugschwingungsvorrichtung umfasst.

Diesbezüglich kann das horizontal schwingbare Fahrzeugteil als Kabinenboden ausgestaltet sein. Bei dem weiteren der beiden Fahrzeugteile kann es sich in diesem Zusammenhang beispielsweise um eine Karosserie des Fahrzeuges handeln.

Bei den vorliegenden "Fahrzeugteilen" kann es sich andererseits auch lediglich um Aufnahmeeinrichtungen für derartige unmittelbare Funktionsbauteile eines Fahrzeuges handeln, die an der Fahrzeugschwingungsvorrichtung vorgesehen sind. Beispielsweise sind derartige Aufnahmeeinrichtungen als Drehlagereinrichtungen realisiert.

Speziell bei schweren Arbeitsmaschinen, wie etwa Traktoren, die oft auf sehr unwegsamem Gelände unterwegs sind, bringt die der Erfindung zugrunde liegende Fahrzeugschwingungsvorrichtung erhebliche Vorteile, da sie insbesondere für einen Fahrzeugführer eine erheblich Entlastung darstellt.

An dieser Stelle sei noch angemerkt, dass sowohl die Fahrzeuglängsrichtung als auch die Fahrzeugbreitenrichtung horizontale Schwingrichtungen für das im Wesentlich horizontal schwingbare Fahrzeugteil darstellen können.

Hinsichtlich eines weiteren Aspekts der Erfindung wird die Aufgabe der Erfindung auch von einem Verfahren zum Dämpfen einer Schwingung eines im Wesentlichen horizontal schwingbaren Fahrzeugteils einer Fahrzeugschwingungsvorrichtung gelöst, bei welcher das horizontal schwingbare Fahrzeugteil gegenüber einem gekoppelten weiteren Fahrzeugteil aus einer Ruheposition heraus und zwischen ersten Auslenkpositionen und zweiten Auslenkpositionen schwingen kann, und bei welcher die Schwingung des im Wesentlichen horizontal schwingbaren Fahrzeugteils mittels eines Dämpfers gedämpft wird, wobei beim Herausschwingen aus der Ruheposition immer eine Druckstufe des Dämpfers und beim Hereinschwingen in die Ruheposition immer eine Zugstufe des Dämpfers die Schwingung des im Wesentlichen horizontal schwingenden Fahrzeugteils dämpft.

Vorteilhafter Weise kann hierdurch auf dem Rückweg zur Ruheposition konstruktiv besonders einfach stets eine schwächere Dämpferleistung wirken, wodurch eine Schwingungskopplung reduziert bzw. eine entsprechende Isolationsleistung erhöht werden kann.

Es versteht sich, dass das Getriebe in vielfältiger Gestalt bereitgestellt werden kann. Weist das Getriebe jedoch eine Schubschwinge mit zwei in Reihe geschalteten Getriebegliedern auf, kann es baulich sehr einfach und kompakt realisiert werden.

Ist die Schubschwinge mittels des Dämpfers mit einem der beiden Fahrzeugteile, vorzugsweise mit dem im Wesentlichen horizontal schwingbaren Fahrzeugteil, gekoppelt, können bereits gute Dämpfungsparameter erzielt werden.

Eine favorisierte Ausführungsvariante sieht vor, dass das Getriebe zwei parallel geschaltete Schubschwingen mit jeweils zwei in Reihe geschalteten Getriebegliedern aufweist, wobei die zwei parallel geschalteten Schubschwingen mittels des Dämpfers miteinander gekoppelt sind.

Vorteilhafter Weise können bei einer derart gewählten Konstruktion seitlich wirkende Kräfte entgegengesetzt wirken und somit symmetrisch in ein Längsführungssystem der Fahrzeugschwingungsvorrichtung eingeleitet werden.

Darüber hinaus kann vorteilhafter Weise gewährleistet werden, dass keine rotativen oder lediglich vernachlässigbar geringe rotative Beschleunigungen im Dämpfer auftreten.

Außerdem können bei der Variante mit nur einer Schubschwinge in etwa nur halb so große Dämpferwege und in etwa halb so große Dämpfergeschwindigkeiten erreicht werden.

Vorzugsweise sind die Getriebeglieder einer Schubschwinge in einem Gelenk gelenkig miteinander verbunden und der Dämpfer ist in diesem Gelenk gelagert. Hierdurch kann eine besonders platzsparende Verbindungskonstruktion der beteiligten Komponenten erreicht werden.

Es versteht sich, dass an der Fahrzeugschwingungsvorrichtung auch anders geartete Hebelwerke umgesetzt sein können, um gleiche oder ähnliche Vorteile zu erzielen.

Vorliegend können zudem die unterschiedlichsten Dämpfertypen zur Anwendung kommen, solange eine hinreichende Horizontaldämpfung an der Fahrzeugschwingungsvorrichtung erzielt werden kann.

Der Platzbedarf der vorliegenden Fahrzeugschwingungsvorrichtung wird erfindungsgemäß dadurch reduziert, dass der Dämpfer eine Federkomponente zum Bereitstellen einer Ausschubkraft umfasst.

Erfindungsgemäß beinhaltet der verwendete Dämpfer eine Gasfeder.

Mit dem vorliegenden Getriebe können vorteilhafter Weise Dämpfer- und Gasfedereigenschaften invertiert werden, so dass die Druckstufe des Dämpfers beim jeweiligen Ausfedern des im Wesentlichen horizontal schwingbaren Fahrzeugteils und die Zugstufe beim jeweiligen Zurückfedern wirken kann.

Wenn man einen Dämpfer mit einer entsprechenden Ausschubkraft einsetzt, kann idealerweise auf eine separate Federeinrichtung zur Rückführung des horizontal schwingbaren Fahrzeugteils in die Ruheposition zur Gänze verzichtet werden. Dies ist im Wesentlichen dadurch bedingt, dass der Dämpfer mittels der vorliegenden Getriebeauslegung bei einem Auslenken des horizontal schwingbaren Fahrzeugteils gegen seine Ausschubkraft zusammengeschoben wird. Insofern wirkt die Ausschubkraft der in dem Dämpfer integrierten Gasfeder als Rückstellkraft zur Positionierung in die Ruheposition.

Im Lichte dieses Aspektes wird die Aufgabe der Erfindung auch von einem Verfahren zum Positionieren eines im Wesentlichen horizontal schwingbaren Fahrzeugteils einer Fahrzeugschwingungsvorrichtung nach Anspruch 1 in einer Ruheposition bzw. in die Ruheposition hinein gelöst, bei welchem eine Federkomponente eines Dämpfers der Fahrzeugschwingungsvorrichtung das im Wesentlich horizontal schwingbare Fahrzeugteil in der Ruheposition hält bzw. das ausgelenkte im Wesentlichen horizontal schwingbare Fahrzeugteil in die Ruheposition hinein zurück verlagert.

Durch diese vorteilhafte Verfahrensweise kann das entsprechende Fahrzeugteil besonders effektiv hinsichtlich seiner Ruheposition positioniert werden.

Auch wird die Aufgabe der Erfindung von einer Verwendung einer Fahrzeugschwingungsvorrichtung nach Anspruch 1 gelöst.

Insofern verfügt die vorliegende Fahrzeugschwingungsvorrichtung über eine Einrichtung zur Rückführung des im Wesentlichen horizontal schwingbaren Fahrzeugteils, welche von dem Dämpfer bereitgestellt wird. Allein eine derartige Rückführeinrichtung bildet herkömmliche Fahrzeugschwingungsvorrichtungen vorteilhaft weiter.

Erfindungsgemäß ist der Dämpfer hinsichtlich seiner Längserstreckung im Wesentlichen horizontal in einer von der Fahrzeuglängsrichtung und der Fahrzeugbreitenrichtung aufgespannten Ebene angeordnet, sodass der Dämpfer besonders flach bauend in die Fahrzeugschwingungsvorrichtung integriert werden kann.

Ist der Dämpfer sowohl in einer Ruheposition als auch in Auslenkpositionen des horizontal schwingbaren Fahrzeugteils stets quer zu dessen Schwingrichtung ausgerichtet, kann der erforderliche Bauraum in eben dieser Schwingrichtung außergewöhnlich gut reduziert werden.

Bei anderen Bauraumanforderungen kann es vorteilhaft sein, wenn der Dämpfer längs der Schwingrichtung oder schräg zur Schwingrichtung eingebaut ist.

Ebenso ist es möglich, den Dämpfer in jedem anderen Winkel zwischen der Längsrichtung, also der Schwingrichtung, und der Querrichtung anzuordnen. Eine derartige schräge Anordnung des Dämpfers wird später beispielhaft ebenso gezeigt und beschrieben wie die Anordnungsmöglichkeiten längs bzw. quer einer Schwingrichtung.

Darüber hinaus kann der Dämpfer auch drehbar gelagert sein, so dass ein ursprünglicher Lagewinkel des Dämpfers während der Dämpferarbeit wechselt.

Weitere Vorteile und Zweckmäßigkeiten der vorliegenden Erfindung sind der nachfolgenden Beschreibung in Verbindung mit der Zeichnung zu entnehmen, in welcher verschiedene Aufsichten unterschiedlich ausgestalteter Fahrzeugschwingungsvorrichtungen gezeigt sind. Hierbei zeigen:
- Figur 1: in einer schematischen Darstellung ein erstes Ausführungsbeispiel einer Fahrzeugschwingungsvorrichtung mit einem als Hebelwerk ausgestalteten Getriebe umfassend zwei parallel geschaltete Schubschwingen und mit einem quer angeordneten Dämpfer in Ruhelage;
- Figur 2: in einer schematischen Darstellung die Fahrzeugschwingungsvorrichtung aus der Figur 1 in einer der ersten bzw. vorderen Auslenklagen;
- Figur 3: in einer schematischen Darstellung die Fahrzeugschwingungsvorrichtung aus den Figuren 1 und 2 in einer der zweiten bzw. hinteren Auslenklagen;
- Figur 4: in einer schematischen Darstellung eine Visualisierung unterschiedlich eingestellter Feder- und Dämpferkennlinien durch Versetzung von Drehlager an einer Fahrzeugschwingungsvorrichtung;
- Figur 5: in einer schematischen Darstellung ein Diagramm mit verschiedenen Kennlinien hinsichtlich versetzter Drehlager;
- Figur 6: in einer schematischen Darstellung ein weiteres Ausführungsbeispiel einer Fahrzeugschwingungsvorrichtung mit einem als Hebelwerk ausgestalteten Getriebe umfassend zwei parallel geschaltete alternative Schubschwingen und mit einem längs angeordneten Dämpfer in Ruhelage;
- Figur 7: in einer schematischen Darstellung die Fahrzeugschwingungsvorrichtung aus der Figur 6 in einer der ersten Auslenklagen;
- Figur 8: in einer schematischen Darstellung die Fahrzeugschwingungsvorrichtung aus den Figuren 6 und 7 in einer der zweiten Auslenklagen;
- Figur 9: in einer schematischen Darstellung ein alternatives Ausführungsbeispiel einer Fahrzeugschwingungsvorrichtung mit einem als Hebelwerk ausgestalteten Getriebe umfassend zwei parallel geschaltete alternative Schubschwingen und mit einem schräg angeordneten Dämpfer in Ruhelage und Auslenklagen;
- Figur 10: in einer schematischen Darstellung ein anderes Ausführungsbeispiel einer Fahrzeugschwingungsvorrichtung mit einem als weiteres Hebelwerk ausgestalteten Getriebe umfassend eine einzelne Schubschwinge und mit einem Dämpfer in Ruhelage;
- Figur 11: in einer schematischen Darstellung die Fahrzeugschwingungsvorrichtung aus der Figur 10 in einer der ersten Auslenklagen;
- Figur 12: in einer schematischen Darstellung die Fahrzeugschwingungsvorrichtung aus den Figuren 10 und 11 in einer der zweiten Auslenklagen;
- Figur 13: in einer schematischen Darstellung ein erstes konkretes Einbaubeispiel einer erfindungsgemäßen Fahrzeugschwingungsvorrichtung mit einem quer eingebauten Dämpfer an einer schwingend gelagerten Fahrzeugkabine in Ruhelage;
- Figur 14: in einer schematischen Darstellung die Fahrzeugschwingungsvorrichtung aus der Figur 13 in einer der ersten Auslenklagen;
- Figur 15: in einer schematischen Darstellung die Fahrzeugschwingungsvorrichtung aus den Figuren 13 und 14 in einer der zweiten Auslenklagen;
- Figur 16: in einer schematischen Darstellung ein zweites konkretes Einbaubeispiel einer erfindungsgemäßen Fahrzeugschwingungsvorrichtung mit einem längs eingebauten Dämpfer an einem schwingend gelagerten Fahrzeugsitz in Ruhelage;
- Figur 17: in einer schematischen Darstellung eine Fahrzeugschwingungsvorrichtung mit einem Getriebe umfassend gerade und gewinkelte Getriebeglieder, wobei ein Dämpfer zwischen zwei geraden Getriebegliedern dämpfungswirkend angeordnet ist; und
- Figur 18: in einer weiteren schematischen Darstellung die Fahrzeugschwingungsvorrichtung aus der Figur 17 in anderer Auslenklage.

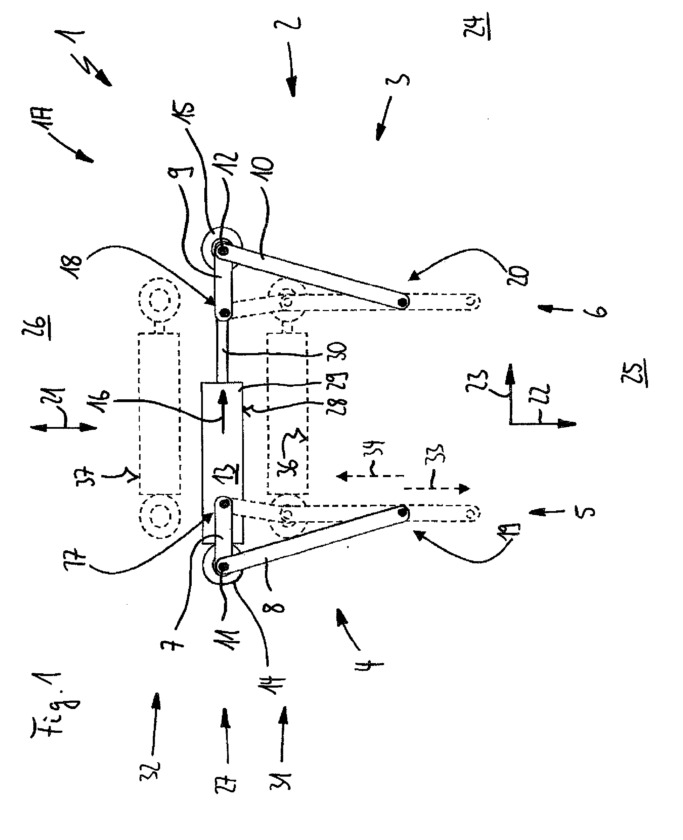

Die in der Figur 1 gezeigte Darstellung verdeutlicht das Grundprinzip einer ersten erfindungsgemäßen Fahrzeugschwingungsvorrichtung 1 mit einer Horizontalschwingeinrichtung 1A umfassend ein Getriebe 2 mit einer Vielzahl 3 an Getriebegliedern, die in ihrer Gesamtheit ein Hebelwerk 4 ausgestalten.

Das Hebelwerk 4 besteht im Wesentlichen aus zwei parallel geschalteten Schubschwingen 5 und 6. Jede der Schubschwingen 5 und 6 verfügt über zwei in Reihe geschaltete Getriebeglieder 7, 8 bzw. 9, 10, die jeweils mittels einer Gelenkverbindung 11 bzw. 12 drehbar miteinander verbunden sind.

In diesen Gelenkverbindungen 11, 12 ist zusätzlich ein Dämpfer 13 mit integrierter Gasfeder (hier nicht beziffert) an den beiden Schubschwingen 5 und 6 gelagert. Die Lagerung erfolgt dämpferseitig über entsprechende Ringgelenke 14 und 15. Die integrierte Gasfeder des Dämpfers 13 bedingt eine Ausschubkraft 16.

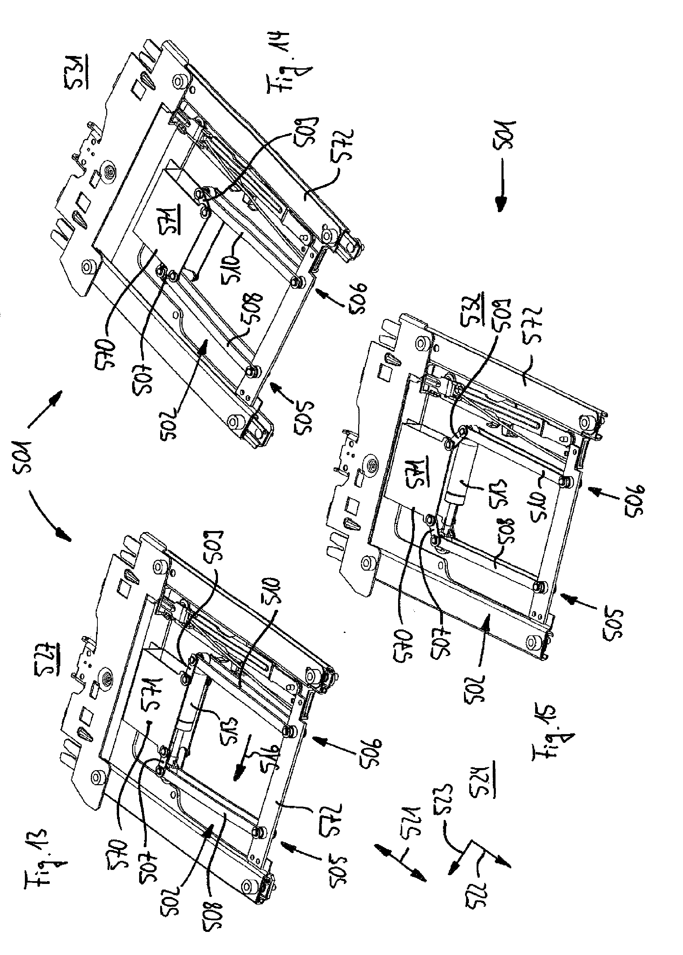

An den beiden Getriebegliedern 7 und 9 kann mittels entsprechender Aufnahmen 17 und 18 - die vorzugsweise als Drehlager ausgestaltet sind - ein horizontal schwingbares Fahrzeugteil (hier nicht gezeigt, siehe aber Figuren 13 bis 16) befestigt werden. Entsprechend kann ein weiteres Fahrzeugteil (hier ebenfalls nicht gezeigt, siehe aber Figuren 13 bis 16) an weiteren Aufnahmen 19 und 20 - die vorzugsweise ebenfalls als Drehlager ausgestaltet sind - angebracht werden.

Das horizontal schwingbare Fahrzeugteil kann gemäß der gezeigten Anordnung in Schwingrichtung 21 schwingen. Die Schwingrichtung 21 fällt in diesem Ausführungsbeispiel mit der Fahrzeuglängsrichtung 22 zusammen; kann in einer anderen Ausführungsvariante jedoch auch mit der Fahrzeugbreitenrichtung 23 fluchten. Die Pfeilspitze der Fahrzeuglängsrichtung 22 zeigt hierbei in Fahrtrichtung eines Fahrzeuges (nicht gezeigt), an welchem die Fahrzeugschwingungsvorrichtung 1 eingesetzt ist.

Die Pfeile hinsichtlich der Fahrzeuglängsrichtung 22 bzw. der Fahrzeugbreitenrichtung 23 spannen vorliegend eine Ebene 24 auf, in welcher sich der Dämpfer 13 hinsichtlich seiner Längserstreckung erstreckt.

Die Ebene 24 fällt gemäß der gewählten Darstellung mit der Papierebene zusammen. Dementsprechend befindet sich gemäß dieser Darstellung die Vorderseite 25 des Fahrzeuges unterhalb und die Hinterseite 26 des Fahrzeuges oberhalb des Dämpfers 13.

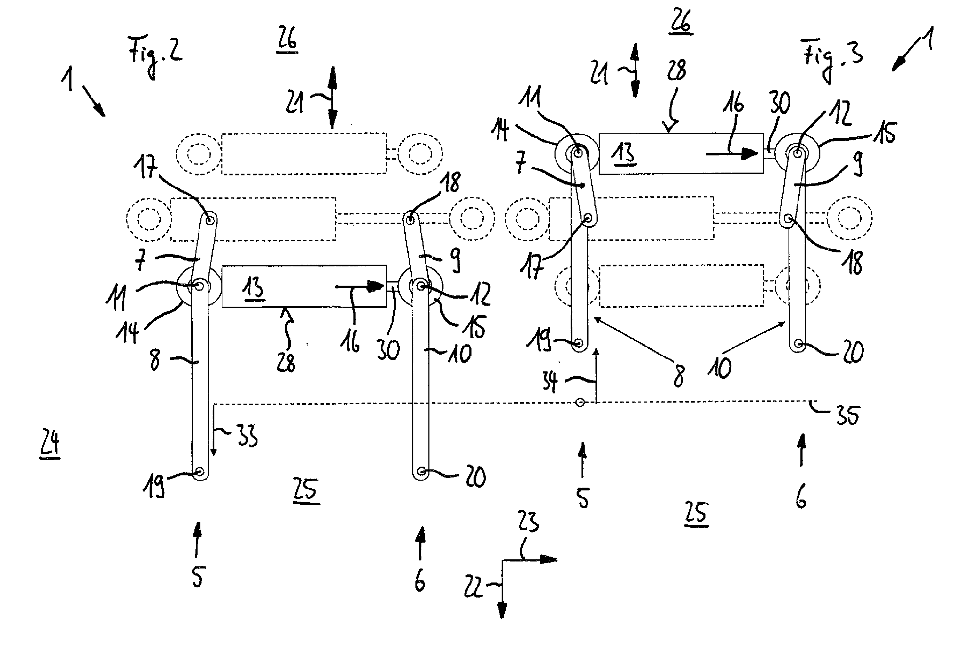

Bei einer nicht angeregten Fahrzeugschwingungsvorrichtung 1 befindet sich insbesondere der Dämpfer 13 in einer Ruhelage 27, die in der Figur 1 durch ein Volllinienmodel 28 illustriert ist (siehe Figuren 2 und 3, gestrichelt). In dieser Ruhelage 27 fluchten die beiden Getriebeglieder 7 und 9 mit dem Gehäuse 29 bzw. mit der Schubstange 30 des Dämpfers 13, wodurch die beiden weiteren Getriebeglieder 8 und 10 seitlich nach außen angestellt sind.

Bei einer in Schwingung angeregten Fahrzeugschwingungsvorrichtung 1 kann der Dämpfer 13 beispielsweise zwischen einer vorderen Auslenklage 31 und einer hinteren Auslenklage 32 vor und zurück schwingen. Entsprechende Auslenkwege bzw. Federwege 33 bzw. 34 sind beispielhaft an der ersten bzw. linken Schubschwinge 5 eingezeichnet. Diese Auslenkwege 33 bzw. 34 sind hinsichtlich der Figuren 2 und 3 auch bezüglich einer schematisch dargestellten fiktiven Nulllinienlage 35 eingezeichnet. Eine Schwingungsanregung kann etwa durch Überfahren einer Fahrbahnunebenheit eingeleitet werden. Die angeregte Schwingung wird von dem Dämpfer 13 gedämpft, sodass sie sich nicht kritisch aufschaukeln kann.

Beim Schwingen in die vordere Auslenklage 31 (siehe auch Figur 2) strecken sich die beiden Schubschwingen 5 und 6 in Schwingrichtung 21, so dass die jeweiligen Getriebeglieder 7 und 8 bzw. 9 und 10 nahezu zueinander fluchtend ausgerichtet sind. Hierbei wirkt die Druckstufe des Dämpfers 13. Zusätzlich wird die Schubstange 29 entgegen der Ausschubkraft 16 in das Gehäuse 30 eingefahren.

Beim Zurückschwingen aus der vorderen Auslenklage 31 heraus bewegt sich der Dämpfer 13 wieder auf die Ruhelage 27 zu. Hierbei wirkt die in der Regel weichere Zugstufe des Dämpfers 13. Hierdurch wird vorteilhafter Weise eine Schwingungskopplung reduziert bzw. eine Schwingungsisolationswirkung gesteigert.

Nach Durchlaufen der Ruhelage 27 in die hintere Auslenklage 32 hinein wirkt wieder die Druckstufe des Dämpfers 13 und beim Zurückschwingen auf die Ruhelage 27 zu wieder die Zugstufe des Dämpfers 13.

In der hinteren Auslenklage 32 legen sich die Getriebeglieder 7 und 8 bzw. 9 und 10 im Wesentlichen zusammen, wodurch sich die Schubschwingen 5 und 6 (siehe Figur 3) verkürzen können.

Das hier erläuterte Horizontalschwingverhalten der Fahrzeugschwingvorrichtung 1 ist im Wesentlichen hinsichtlich des illustrierten Dämpfers 13 gezeigt und beschrieben. Es versteht sich, dass sich dementsprechend auch die weiteren Komponenten des Getriebes 2, insbesondere auch das horizontal schwingbare Fahrzeugteil, bewegen bzw. mitschwingen.

Gemäß der Figur 1 sind die beiden Auslenklagen 31 und 32 durch gestrichelte Linienmodele 36 bzw. 37 illustriert, wobei die vordere Auslenklage 31 in der Darstellung gemäß der Figur 2 als Volllinienmodel 28 abgebildet ist, so dass die diesbezüglichen Lagen insbesondere der Getriebeglieder 7, 8 und 9, 10 gut zu erkennen sind. Gleiches gilt hinsichtlich der Darstellung gemäß Figur 3, in welcher die hintere Auslenklage 32 als Volllinienmodel 28 abgebildet ist.

Vorteilhafter Weise wird der Dämpfer 13 mittels seiner Ausschubkraft 16 stets in die Ruhelage 27 hinein verlagert bzw. in der Ruhelage 27 gehalten, so dass zusätzliche Federn hierfür nicht benötigt werden. Dies wirkt sich nicht nur positiv auf den Platzbedarf der Fahrzeugschwingungsvorrichtung 1 aus sondern auch auf diesbezügliche Montage- und Wartungsarbeiten.

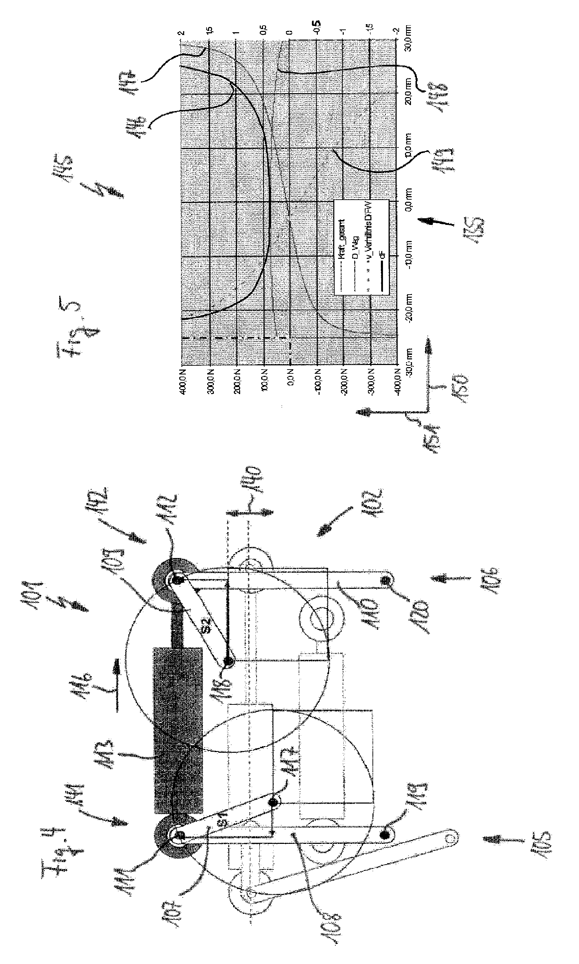

Die in der Figur 4 gezeigte Fahrzeugschwingungsvorrichtung 101 weist einen ähnlichen Getriebeaufbau auf wie die Fahrzeugschwingungsvorrichtung 1 aus den Figuren 1 bis 3. Insofern werden diesbezüglich nur die wesentlichen Komponenten beschrieben, um Wiederholungen zu vermeiden.

Die Fahrzeugschwingungsvorrichtung 101 umfasst ein Getriebe 102 mit zwei Schubschwingen 105 und 106. Jede der Schubschwingen 105 und 106 verfügt über zwei in Reihe geschaltete Getriebeglieder 107, 108 bzw. 109, 110, die jeweils mittels einer Gelenkverbindung 111 bzw. 112 drehbar miteinander verbunden sind. In diesen Gelenkverbindungen 111 und 112 ist ein Dämpfer 113 gelagert. Der Dämpfer 113 umfasst eine integrierte Gasfeder, welche eine Ausschubkraft 116 bereitstellt.

Darüber hinaus sind an den Getriebegliedern 107 und 108 Aufnahmen 117 und 118 in Gestalt von Drehlagern zum Aufnehmen eines hier nicht dargestellten horizontal schwingbaren Fahrzeugteils vorgesehen. Entsprechende Aufnahmen 119 bzw. 120 für ein weiteres Fahrzeugteil befinden sich an den Getriebegliedern 109 und 110.

Durch Versetzen der Drehlager 117 und 118 in der Höhe 140 - siehe hierzu die unterschiedlichen Lagen der beiden Getriebeglieder 107 und 108 mit den kurzen Schenkellängen S1 bzw. S2 bezüglich der linken Seite 141 und der rechten Seite 142 - und einer Anpassung eben dieser kurzen Schenkellängen S1 und S2 kann die Progression der wirkenden Feder- und Dämpferkennlinien für vorhandene Federwege (hier nicht eingezeichnet) vorteilhaft eingestellt werden.

In dem in der Figur 5 gezeigten Diagramm 145 sind Kennlinien 146, 147, 148 und 149 hinsichtlich der versetzten Drehlager 117 bzw. 118 (siehe Figur 4) dargestellt, wobei an der Abszisse 150 der Dämpferweg in Millimetern (mm) und an der Ordinate 151 links die Ausschubkraft 116 in Newton (N) des Dämpfers 113 bzw. dessen Gasfeder sowie rechts ein Geschwindigkeitsverhältnis bezüglich eines Dämpferwegs und eines Federwegs aufgetragen sind.

Die Kennlinie 146 ist die Federkennlinie der Fahrzeugschwingungsvorrichtung 101, welche um die Nulllage 135 herum einen sehr flachen Bereich aufweist und erst bei Dämpferwegen jenseits von +/-12 mm spürbar ansteigt. Insofern ermöglicht diese Konstruktion einen hohen Sitzkomfort.

Die Kennlinie 147 ist die Gesamtkraftlinie des Dämpfers 113 und visualisiert anschaulich, dass die Gesamtkraft um die Nulllage 135 herum sehr gering ist und erst ab Dämpferwegen jenseits von +/-20 mm jeweils einen extremen Anstieg verzeichnet. Insofern kann ein relativ großer Komfortbereich erzielt werden.

Die Kennlinie 148 kennzeichnet den möglichen Dämpferweg des Dämpfers 113. Rechts der Nulllage 135 beträgt der Dämpferweg ca. +30 mm, bis der Dämpfer 113 voll ausgefahren anschlägt. Dementsprechend steigt auch die Gesamtkraftlinie 147 kurz vor Erreichen des Endanschlags extrem an. Links der Nulllage 135 bei etwa -25 mm ist der Dämpfer 113 maximal eingefahren und die Gesamtkraftlinie 147 steigt in entgegengesetzter Richtung extrem an.

Mit der Kennlinie 149 ist das Geschwindigkeitsverhältnis hinsichtlich der Dämpfer-/Federwege beim Arbeiten der Fahrzeugschwingungsvorrichtung 101 angegeben. Um die Nulllage 135 herum beträgt das Geschwindigkeitsverhältnis in etwa Null. Die Fahrzeugschwingungsvorrichtung 101 befindet sich weitestgehend in Ruhe. Arbeitet die Fahrzeugschwingungsvorrichtung 101 und der Dämpfer 113 fährt entsprechend aus bzw. ein, steigt das Geschwindigkeitsverhältnis entsprechend der Dämpferbetätigung mit umgekehrten Vorzeichen an, bis der Dämpfer 113 seine jeweilige Endlage erreicht und dort für einen Moment still steht. In diesen beiden Endlagen +30 mm bzw. -25 mm fällt die Dämpfergeschwindigkeit wieder auf den Wert Null zurück. Insofern fällt das Geschwindigkeitsverhältnis hinsichtlich der Dämpfer-/Federwege ebenfalls auf den Wert Null zurück, wie mit der Kennlinie 149 veranschaulicht. In diesen Endlagen ist der Sitz entweder nach vorne oder nach hinten ausgefedert.

Insgesamt untermauern die einzelnen Kennlinien 146, 147, 148 und 149 die Erkenntnis, dass durch ein bewusstes Versetzen von Drehlagern an den der Erfindung zugrunde liegenden Fahrzeugschwingungsvorrichtungen insbesondere die Federkennlinie 146 hinsichtlich Ihrer Progression vorteilhaft variiert bzw. eingestellt werden kann.

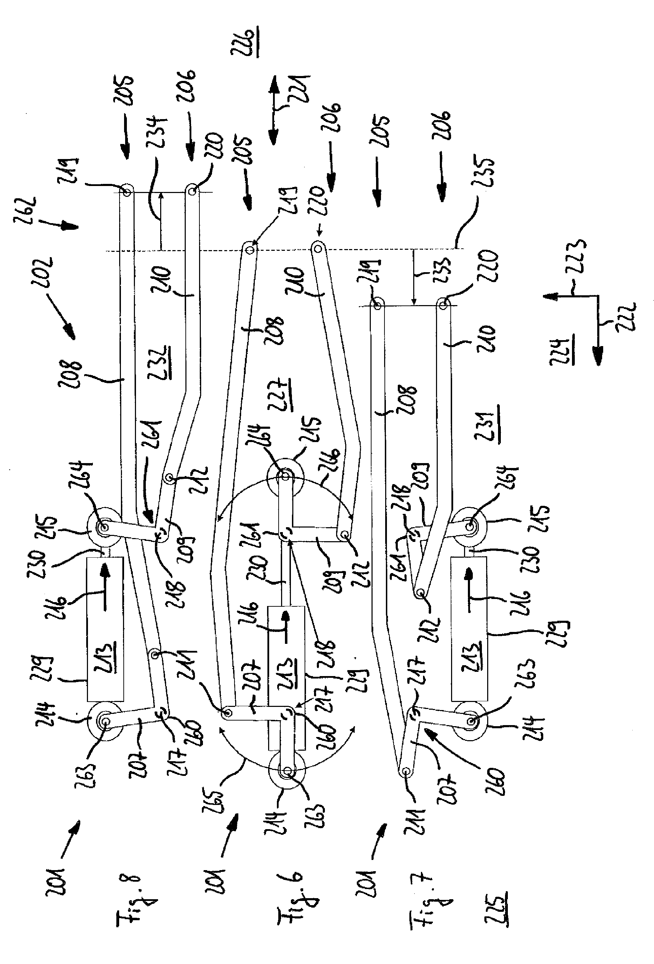

Das in den Figuren 6 bis 8 gezeigte weitere Ausführungsbeispiel zeigt eine andere Fahrzeugschwingungsvorrichtung 201 in einer Ruhelage 227 (siehe Figur 6), in einer vorderen Auslenklage 231 (siehe Figur 7) und in einer hinteren Auslenklage 232 (siehe Figur 8).

Die Fahrzeugschwingungsvorrichtung 201 verfügt über ein Getriebe 202, bei welchem ein Dämpfer 213 längs - also mit seiner Längserstreckung in Schwingrichtung 221 ausgerichtet - in der Fahrzeugschwingungsvorrichtung 201 eingebaut ist.

Das Getriebe 202 umfasst ebenfalls zwei Schubschwingen 205 und 206. Die Schubschwinge 205 gestaltet sich im Wesentlichen durch zwei Getriebeglieder 207 und 208, die in diesem Ausführungsbeispiel im Gegensatz zu den vorherigen Ausführungsbeispielen der Figuren 1, 2, 3 und 4 zu einer Bügelform gebogen sind. Die beiden Getriebeglieder 207 und 208 sind mittels einer ersten Gelenkverbindung 211 drehbar miteinander verbunden. Die Schubschwinge 206 zeichnet sich durch zwei in einer Gelenkverbindung 212 miteinander gekoppelten Getriebeglieder 209 und 210 aus.

An den beiden Getriebegliedern 207 und 209 ist jeweils eine Aufnahme 217 bzw. 218 in Gestalt von Drehlagern zum Anbringen eines horizontal schwingbaren Fahrzeugteils (hier nicht gezeigt) vorgesehen. Die Drehlager 217, 218 sind im Bereich einer Knickstelle 260 bzw. 261 der Getriebeglieder 207 und 209 angeordnet.

Zum Befestigen eines weiteren Fahrzeugteils (hier nicht gezeigt) an der Fahrzeugschwingungsvorrichtung 201 sind die Getriebeglieder 208 und 210 mit entsprechenden Aufnahmen 219 und 220 ausgerüstet. Die Aufnahmen 219 und 220 sind ebenfalls in Gestalt von Drehlagern vorgesehen, jedoch jeweils in einem Endbereich 262 (hier nur einzeln beziffert) der Getriebeglieder 208 und 210, der den Getriebegliedern 207 bzw. 209 abgewandt ist.

Der längs eingebaute Dämpfer 213 ist hinsichtlich der ersten Schubschwinge 205 mit einem ersten Ringgelenk 214 in einem Lager 263 des Getriebegliedes 207 mit Letzterem gelenkig verbunden. Mit der zweiten Schubschwinge 206 ist der Dämpfer 213 über ein weiteres Ringgelenk 215 mechanisch verbunden. Hierzu ist an dem Getriebeglied 208 ein Lager 264 vorgesehen. Zudem verfügt auch der Dämpfer 213 über eine integrierte Gasfeder, aufgrund derer eine Schubstange 230 mit einer Ausschubkraft 216 aus einem Dämpfergehäuse 229 heraus bewegt wird.

Schematisch ist rechts an der Darstellung eine Nulllinienlage 235 eingezeichnet, von welcher aus schematisch ein vorderer Auslenkweg bzw. Federweg 233 (Figur 7) und ein hinterer Auslenkweg bzw. Federweg 234 (Figur 8) eingetragen sind.

Gemäß der Darstellung nach der Figur 6 sind schematisch zwei Kreisbogenbahnen 265 und 266 insbesondere hinsichtlich der beiden Lager 263 und 264 eingezeichnet, die veranschaulichen, inwiefern speziell der Dämpfer 213 um die Ruhelage 227 schwingt.

An dieser Stelle sei noch die Fahrzeuglängsrichtung 222, welche mit der Schwingrichtung 221 zusammenfällt, und die Fahrzeugbreitenrichtung 223 erwähnt. Von diesen wird die Ebene 224 aufgespannt, in welcher der Dämpfer 213 mit seiner Längserstreckung liegt.

Die Vorderseite 225 der Fahrzeugschwingungsvorrichtung 201 befindet sich entsprechend links und die Hinterseite 226 rechts der Darstellung gemäß den Figuren 6 bis 7.

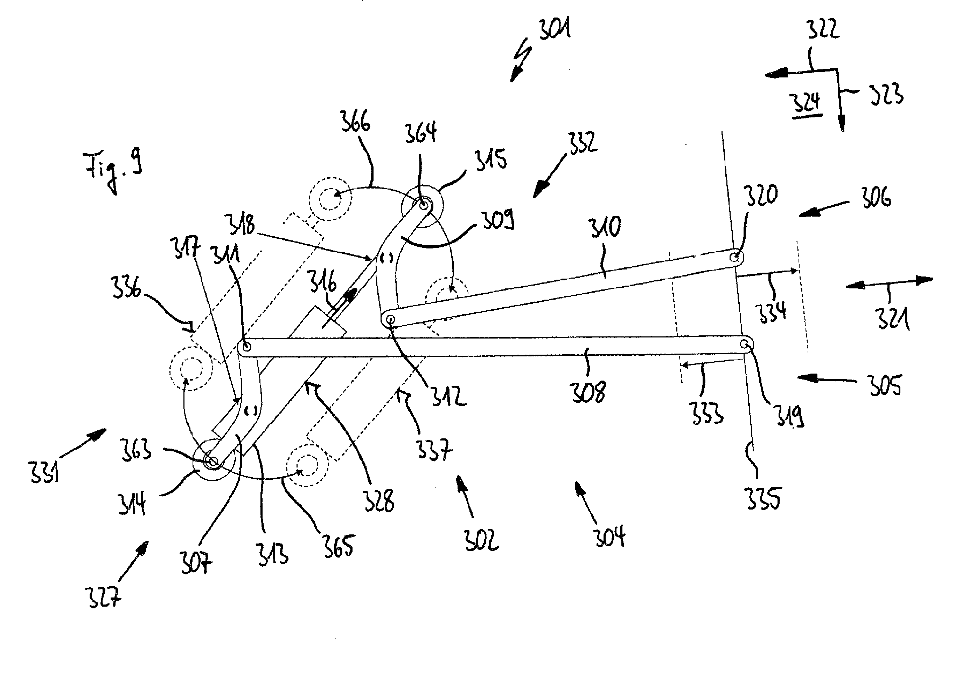

Bei der in der Figur 9 gezeigten Fahrzeugschwingungsvorrichtung 301 ist ein Dämpfer 313 schräg zu der Fahrzeuglängsrichtung 322 bzw. der Fahrzeugbreitenrichtung 323 eines hier nicht gezeigten Fahrzeugs und in einer von diesen aufgespannten Ebene 324 angeordnet. Der schräge Einbau eignet sich für Lösungen, bei denen der Dämpfer 313 beispielsweise aufgrund von ungünstigen Platzverhältnissen nicht oder nur umständlich quer oder längs in die Fahrzeugschwingungsvorrichtung 301 integriert werden kann.

Der Dämpfer 313 wirkt zwischen zwei Schubschwingen 305 und 306 eines Getriebes 302, welches wie zuvor auch hier als Hebelwerk 304 ausgestaltet ist.

Die Schubschwinge 305 besteht im Wesentlichen aus zwei in einer Gelenkverbindung 311 verbundenen Getriebegliedern 307 und 308, wobei das kürzere Getriebeglied 307 leicht gebogen ausgeführt ist, um die Getriebekinematik an den schrägen Einbau des Dämpfers 313 anzupassen.

Entsprechend weist die Schubschwinge 306 zwei Getriebeglieder 309 und 310 auf, die mit einer Gelenkverbindung 312 gelenkig miteinander verbunden sind. Auch hier ist das kürzere Getriebeglied 309 leicht gebogen ausgeführt.

An Enden der beiden Getriebeglieder 307 und 309 sind in Lagern 363 und 364 Ringgelenke 314 bzw. 315 des Dämpfers 313 gelagert.

Eine linke Kreisbogenbahn 365 und eine rechte Kreisbogenbahn 366 deuten an, wie insbesondere der Dämpfer 313 zwischen einer vorderen Auslenklage 331 und einer hinteren Auslenklage 332 schwingt und dabei die Ruhelage 327 der Fahrzeugschwingungsvorrichtung 301 durchschwungen wird.

In der Ruhelage 327 ist die Fahrzeugschwingungsvorrichtung 301 als Volllinienmodel 328 und in den beiden Auslenklagen 331 und 332 jeweils als gestricheltes Linienmodell 336 bzw. 337.

Vorteilhafter Weise wird die Fahrzeugschwingungsvorrichtung 301 auch in diesem Ausführungsbeispiel mittels einer Ausschubkraft 316 des Dämpfers 313 in die Ruhelage 327 hinein eingependelt.

Ein horizontal schwingbares Fahrzeugteil (nicht dargestellt) wird mittels Aufnahmen 317 und 318 an den Getriebegliedern 307 und 308 befestigt, während ein weiteres Fahrzeugteil (nicht dargestellt) mittels Aufnahmen 319 und 320 an den Getriebegliedern 308 und 310 befestigt werden kann. Auch hier sind die Aufnahmen 317, 318, 319 und 320 als Drehlager ausgestaltet.

Das horizontal schwingbare Fahrzeugteil kann in Schwingrichtung 321 schwingen, wobei ein vorderer Auslenk- bzw. Federweg 333 und ein hinterer Auslenk- bzw. Federweg 334 schematisch hinsichtlich einer fiktiv eingezeichneten Nulllinienlage 335 eingezeichnet sind.

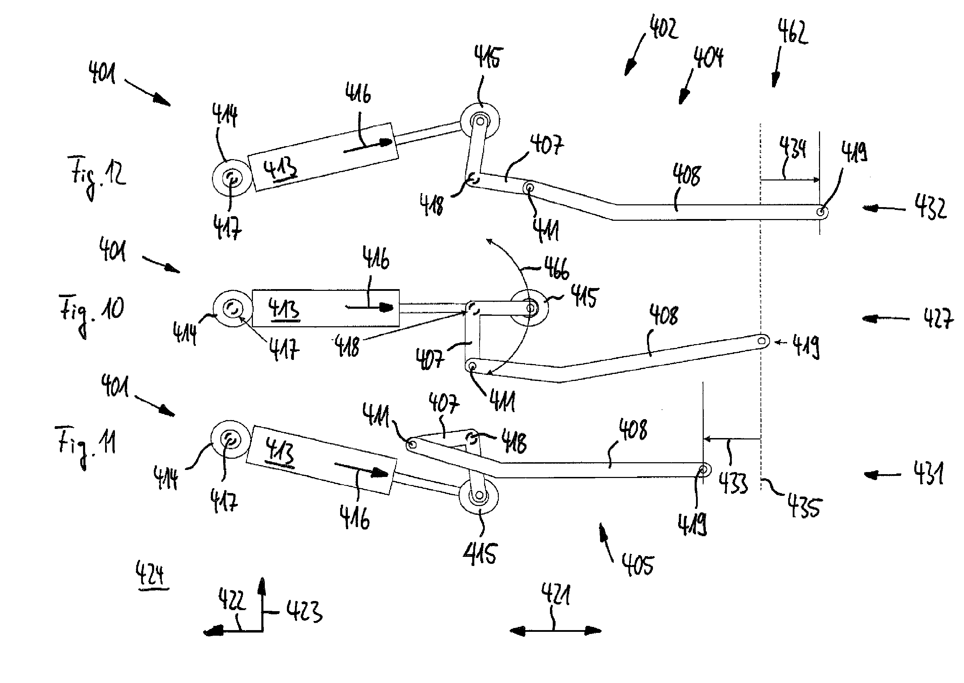

Die in den Figuren 10 bis 12 gezeigte weitere Fahrzeugschwingungsvorrichtung 401 ist in einer Ruhelage 427 (siehe Figur 10), in einer vorderen Auslenklage 431 (siehe Figur 11) und in einer hinteren Auslenklage 432 (siehe Figur 12) abgebildet.

Die Fahrzeugschwingungsvorrichtung 401 verfügt über ein Getriebe 402, bei welchem ein Dämpfer 413 längs - also mit seiner Längserstreckung in Schwingrichtung 421 ausgerichtet - in der Fahrzeugschwingungsvorrichtung 401 eingebaut ist.

In Abweichung zu den vorhergehenden Ausführungsbeispielen weist das Getriebe 402 jedoch ein Hebelwerk 404 mit nur einer einzigen Schubschwinge 405 auf, die jedoch wieder aus zwei Getriebegliedern 407 und 408 besteht. Letztere sind mittels einer Gelenkverbindung 411 drehgelenkig miteinander verbunden.

Ein horizontal schwingbares Fahrzeugteil (hier nicht gezeigt) wird über die als Drehlager ausgestaltete Aufnahmen 417 und 418 an der Fahrzeugschwingvorrichtung 401 befestigt, wobei die Aufnahme 417 diesmal unmittelbar an einem Ringgelenk 414 des Dämpfers 413 vorgesehen ist. Die Aufnahme 418 ist wieder dem kürzeren Getriebeglied 407 zugeordnet, welches über ein Ringgelenk 415 mit dem Dämpfer 413 verbunden ist.

Das horizontal schwingbare Fahrzeugteil kann mittels der Fahrzeugschwingungsvorrichtung 401 in Schwingrichtung 421 schwingen. Während das horizontal schwingbare Fahrzeugteil mit einem vorderen Auslenk- bzw. Federweg 433 und einem hinteren Auslenk- bzw. Federweg 434 zwischen einer vorderen Auslenklage 431 und einer hinteren Auslenklage 432 um eine fiktiv eingezeichnete Nulllinienlage 435 pendelt, schwenkt insbesondere das Ringgelenk 415 entlang einer Kreisbogenbahn 466 in einer von der Fahrzeuglängsrichtung 422 und der Fahrzeugbreitenrichtung 423 aufgespannten Ebene 424.

Wie auch bei den zuvor beschriebenen Ausführungsbeispielen stabilisiert sich die Fahrzeugschwingungsvorrichtung 401 in der Ruhelage 427 vorteilhafter Weise durch die Ausschubkraft 416 des Dämpfers 413 selbst. Der Dämpfer 413 verfügt hierfür über eine Gasfeder (nicht gezeigt).

Ein weiteres Fahrzeugteil für die Fahrzeugschwingvorrichtung 401 wird an einer einzelnen Aufnahme 419 befestigt, die im Endbereich 462 des Getriebegliedes 408 angeordnet ist.

Insbesondere über die Länge der gewinkelten Getriebeglieder 407 und 408 kann vorteilhafter Weise die Übersetzung der wirkenden Kräfte des Dämpfers 413 auf den Auslenk- bzw. Federweg 434 verändert werden. Im Übrigen trifft dies auch auf die anderen Ausführungsbeispiele mit gewinkelten Getriebegliedern zu.

Des Weiteren kann eines der gewinkelten Getriebeglieder 407 bzw. 408 auf den Auslenk- bzw. Federweg 434 des Dämpfers 413 und das andere der gewinkelten Getriebeglieder 407 bzw. 408 für eine Korrektur der Übersetzung ausgelegt werden.

Die in den Figuren 13 bis 15 gezeigte Fahrzeugschwingungsvorrichtung 501 hat ein horizontal schwingbares Fahrzeugteil 570, welches in diesem konkreten Einbaubeispiel als Kabinenbodenbereich 571 einer Fahrzeugkabine (nicht gezeigt) eines hier nur durch ein Karosseriebauteil 572 angedeuteten Fahrzeugs ausgestaltet ist. Das Karosseriebauteil 572 ist im Sinne der Erfindung in diesem konkreten Einbaubeispiel ein weiteres Fahrzeugteil 573 der Fahrzeugschwingungsvorrichtung 501, zu welchem das horizontal schwingbare Fahrzeugteil 570 schwingbar gelagert ist.

Insofern ist der Kabinenbodenbereich 571 gegenüber dem Karosseriebauteil 572 in Schwingrichtung 521 (siehe insbesondere Figur 13) schwingbar gelagert, wobei die Fahrzeugschwingungsvorrichtung 501 nach der Darstellung der Figur 13 in Ruhelage 527, nach der Darstellung der Figur 14 in einer vorderen Auslenklage 531 und nach der Darstellung der Figur 15 in einer hinteren Auslenklage 532 gezeigt ist.

Die Schwingrichtung 521 fluchtet somit mit der Fahrzeuglängsrichtung 522 und verläuft quer zu der Fahrzeugbreitenrichtung 523.

Die Fahrzeugschwingungsvorrichtung 501 verfügt über ein Getriebe 502 mit zwei parallel geschalteten Schubschwingen 505 und 506, zwischen denen erfindungsgemäß ein Dämpfer 513 mit einer Ausschubkraft 516 wirkt. Die Schubschwingen 505, 506 sind als Hebelwerk 504 umfassend Getriebeglieder 507, 508 bzw. 509, 510 ausgestaltet. Der Dämpfer 513 ist auch hier in einer von der Fahrzeuglängsrichtung 522 und der Fahrzeugbreitenrichtung 523 aufgespannten Ebene 524 raumsparend angeordnet.

Ansonsten entspricht der Aufbau der Fahrzeugschwingungsvorrichtung 501 insbesondere demjenigen Aufbau der Fahrzeugschwingungsvorrichtung 1 aus den Figuren 1 bis 3. Insofern wird auf die diesbezügliche Beschreibung verwiesen, um Wiederholungen zu vermeiden.

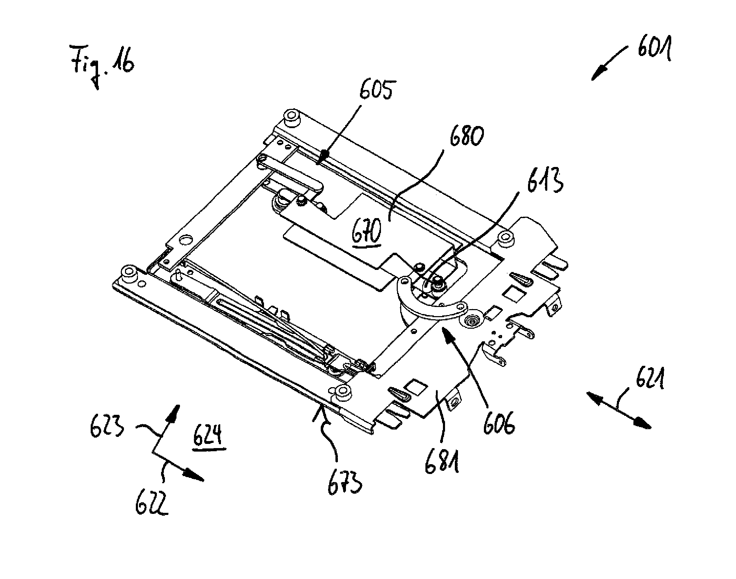

Ein anderes konkretes Anwendungsbeispiel einer Fahrzeugschwingungsvorrichtung 601 ist in der Figur 16 gezeigt. Dieses betrifft einen Fahrzeugsitz eines Kraftfahrzeugs, speziell eines Traktors, bei welchem ein Sitzoberteil 680 als horizontal schwingbares Fahrzeugteil 670 mit einer Schwingrichtung 621 gegenüber einem Sitzunterteil 681 als weiteres Fahrzeugteil 673 schwingen kann.

Die Schwingrichtung 621 fällt hierbei wieder mit der Fahrzeuglängsrichtung 622 zusammen und ist quer zu der Fahrzeugbreitenrichtung 623 angeordnet.

Die Fahrzeugschwingungsvorrichtung 601 verfügt über ein Getriebe 602 mit zwei Schubschwingen 605 und 606, zwischen denen ein längs der Schwingrichtung 621 eingebauter Dämpfer 613 in zuvor bereits mehrfach beschriebener Weise wirkt. Sowohl der Dämpfer 613 als auch das Getriebe 602 liegen und wirken wieder in einer von der Fahrzeuglängsrichtung 622 und der Fahrzeugbreitenrichtung 623 aufgespannten Ebene 624.

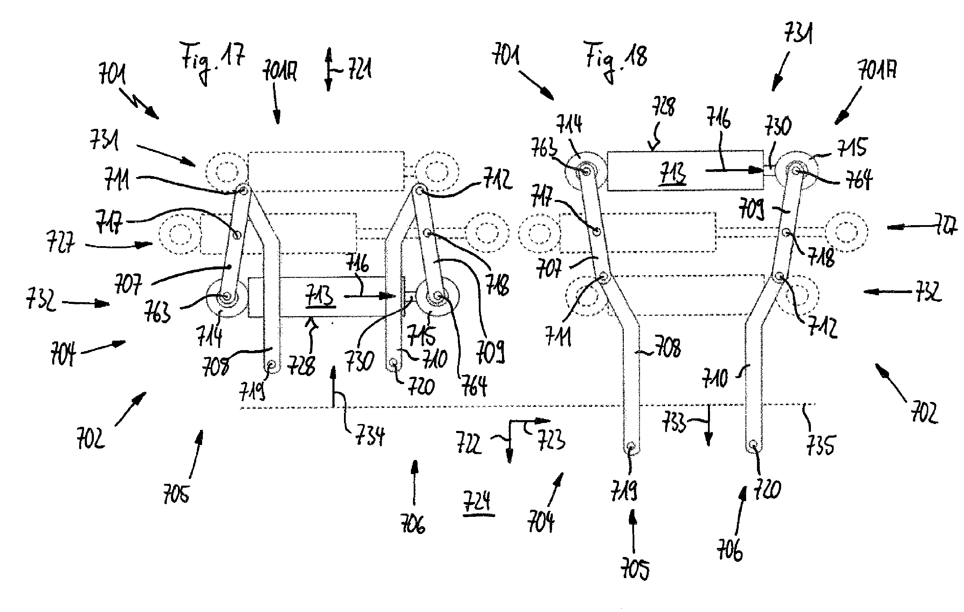

Die in den Figuren 17 und 18 gezeigte weitere Fahrzeugschwingungsvorrichtung 701 verfügt über eine Horizontalschwingungseinrichtung 701A mit einem Getriebe 702, welches ein Hebelwerk 704 aus gerade ausgestalteten Getriebegliedern 707 und 709 und aus gewinkelt bzw. gekrümmt ausgestalteten Getriebegliedern 708 und 710 umfasst.

Das gerade ausgestaltete Getriebeglied 707 und das gewinkelt ausgestaltete Getriebeglied 708 bilden eine erste Schubschwinge 705. Dementsprechend setzt sich eine zweite Schubschwinge 706 aus dem gerade ausgestalteten Getriebeglied 709 und dem gewinkelten Getriebeglied 710 zusammen.

Die Getriebeglieder 707 und 708 sind in Reihe geschaltet und mit einer Drehgelenkverbindung 711 drehgelenkig miteinander verbunden. Die Getriebeglieder 709 und 710 sind ebenfalls in Reihe geschaltet und mit einer Drehgelenkverbindung 712 drehgelenkig miteinander verbunden.

Das gerade ausgestaltete Getriebeglied 707 verfügt über ein Lager 763, in welchem ein erstes Ringgelenk 714 des Dämpfers 713 gelagert ist. Ein zweites Ringgelenk 715 des Dämpfers 713 ist in einem Lager 764 des anderen gerade ausgestalteten Getriebeglieds 709 gelagert.

Insofern kann der Dämpfer 713 zwischen der ersten Schubschwinge 705 und der zweiten Schubschwinge 706 dämpfend wirken.

Die Drehgelenkverbindung 711 und das Lager 763 sind hierbei an sich gegenüberliegenden Enden des gerade ausgestalteten Getriebeglieds 707 und die Drehgelenkverbindung 712 und das Lager 764 sind an sich gegenüberliegenden Enden des gerade ausgestalteten Getriebeglieds 709 platziert.

Dazwischen ist jeweils eine Aufnahme 717 bzw. 718 in Gestalt eines Drehlagers zum Anbringen eines hier nicht gezeigten horizontal schwingbaren Fahrzeugteils angeordnet.

Insbesondere durch die Auslegung der gerade ausgestalteten Getriebeglieder 707 und 709 beispielsweise hinsichtlich ihrer Längen, der Platzierung ihrer Aufnahmen 717 und 718, ihrer Drehgelenkverbindungen 711 bzw. 712 und ihrer Lager 763 bzw. 764 sowie der sich daraus ergebenen Abstandsverhältnisse kann die Übersetzung der Fahrzeugschwingungsvorrichtung 701 vielfältig eingestellt werden.

Speziell längere Getriebeglieder 707 und 709 lassen den Dämpfer 713 bzw. eine diesbezügliche Schubstange 730 nicht so weit ein- bzw. ausfahren, so dass hierdurch eine weichere Abstimmung der Fahrzeugschwingungsvorrichtung 701 konstruktiv einfach erzielt werden kann.

Die ungerade ausgestalteten Getriebeglieder 708 und 710 weisen an ihren den Drehgelenkverbindungen 711 bzw. 712 gegenüberliegenden Schenkelenden jeweils eine weitere Aufnahme 719 bzw. 720 auf, an denen - wie bei den anderen Ausführungsbeispielen auch - ein weiteres Fahrzeugteil (hier nicht gezeigt) befestigt werden kann.

Auch in diesem Ausführungsbeispiel ist der Dämpfer 713 im Wesentlichen quer zu einer Schwingrichtung 721 der Fahrzeugschwingungsvorrichtung 701 und in einer von einer Fahrzeuglängsrichtung 722 und einer Fahrzeugbreitenrichtung 723 aufgespannten Ebene 724 ausgerichtet angeordnet. Insofern integriert sich der Dämpfer 713 sehr flach in die Fahrzeugschwingungsvorrichtung 701.

Die Fahrzeugschwingungsvorrichtung 701 schwingt hierbei um eine Nulllinienlage 735 herum.

Gemäß der Darstellung nach der Figur 17 ist die Fahrzeugschwingungsvorrichtung 701 in einer hinteren Auslenklage 732 mit einem Auslenkweg bzw. Federweg 734 dargestellt, in welcher der Dämpfer 713 als Volllinienmodell 728 gezeigt ist. Schematisch ist der Dämpfer 713 jeweils als gestricheltes Linienmodell zusätzlich noch in einer Ruhelage 727 und in einer vorderen Auslenklage 731 andeutungsweise dargestellt.

Gemäß der Darstellung nach der Figur 8 ist die Fahrzeugschwingungsvorrichtung 701 in der vorderen Auslenklage 731 gezeigt, in welcher der Dämpfer 713 als Volllinienmodel 728 dargestellt ist. Dementsprechend ist der Dämpfer 713 jeweils als gestricheltes Linienmodell in der Ruhelage 727 bzw. in der hinteren Auslenklage 732 der Fahrzeugschwingungsvorrichtung 701 illustriert.

In der Ruhelage 727 ist die Schubstange 730 aufgrund einer Ausschubkraft 716 einer hier nicht gezeigten Gasfeder des Dämpfers 713 ausgefahren, wodurch die Fahrzeugschwingungsvorrichtung 701 in dieser Ruhelage 727 gehalten werden kann.

Erfolgt jedoch eine stärkere Schwingungsanregung schwingt die Fahrzeugschwingungsvorrichtung 701 bzw. speziell das hier nicht gezeigte horizontal schwingbare Fahrzeugteil zwischen vorderen und hinteren Auslenklagen 731 und 732 vor und zurück, so dass die Schubstange 730 entgegen der Ausschubkraft 716 immer wieder in den Dämpfer 713 eingeschoben wird.

Während eine Dämpfereinheit des Dämpfers 713 die Schwingungen mittels einer Zug- bzw. Druckstufe dämpft, drückt die Ausschubkraft 716 einer Federeinheit des Dämpfers 713 die Fahrzeugschwingungsvorrichtung 701 immer wieder in die Ruhelage 727 hinein, bis sich die Fahrzeugschwingungseinrichtung 701 sich wieder in diese Ruhelage 727 einpendeln kann.

Insofern ist eine besonders kompakt bauende Dämpfer-Feder-Einheit an der Fahrzeugschwingungsvorrichtung 701 realisiert.

Sämtliche in den Anmeldungsunterlagen offenbarten Merkmale werden als erfindungswesentlich beansprucht, sofern sie einzeln oder in Kombination miteinander gegenüber dem Stand der Technik neu sind.

### Bezugszeichenliste

- 1: Fahrzeugschwingungsvorrichtung
- 1A: Horizontalschwingeinrichtung
- 2: Getriebe
- 3: Vielzahl an Getriebegliedern
- 4: Hebelwerk
- 5: erste Schubschwinge
- 6: zweite Schubschwinge
- 7: erstes Getriebeglied
- 8: zweites Getriebeglied
- 9: drittes Getriebeglied
- 10: viertes Getriebeglied
- 11: erste Gelenkverbindung
- 12: zweite Gelenkverbindung
- 13: Dämpfer
- 14: erstes Ringgelenk
- 15: zweites Ringgelenk
- 16: Ausschubkraft
- 17: erste Aufnahme bzw. erstes Drehlager
- 18: zweite Aufnahme bzw. zweites Drehlager
- 19: dritte Aufnahme bzw. drittes Drehlager
- 20: vierte Aufnahme bzw. viertes Drehlager
- 21: Schwingrichtung
- 22: Fahrzeuglängsrichtung
- 23: Fahrzeugbreitenrichtung
- 24: Ebene
- 25: Vorderseite
- 26: Hinterseite
- 27: Ruhelage
- 28: Volllinienmodel
- 29: Gehäuse
- 30: Schubstange
- 31: vordere Auslenklage
- 32: hintere Auslenklage
- 33: vorderer Auslenk- bzw. Federweg
- 34: hinterer Auslenk- bzw. Federweg
- 35: Nulllinienlage
- 36: gestricheltes Linienmodel
- 37: gestricheltes Linienmodel

- 101: Fahrzeugschwingungsvorrichtung
- 102: Getriebe
- 105: erste Schubschwinge
- 106: zweite Schubschwinge
- 107: erstes Getriebeglied
- 108: zweites Getriebeglied
- 109: drittes Getriebeglied
- 110: viertes Getriebeglied
- 111: erste Gelenkverbindung
- 112: zweite Gelenkverbindung
- 113: Dämpfer
- 116: Ausschubkraft
- 117: erste Aufnahme bzw. erstes Drehlager
- 118: zweite Aufnahme bzw. zweites Drehlager
- 119: dritte Aufnahme bzw. drittes Drehlager
- 120: vierte Aufnahme bzw. viertes Drehlager
- 135: Nulllage
- 140: Höhe
- 141: linke Seite
- 142: rechte Seite
- 145: Diagramm
- 146: erste Kennlinie
- 147: zweite Kennlinie
- 148: dritte Kennlinie
- 149: vierte Kennlinie
- 150: Abszisse
- 151: Ordinate

- 201: Fahrzeugschwingungsvorrichtung
- 202: Getriebe
- 205: erste Schubschwinge
- 206: zweite Schubschwinge
- 207: erstes Getriebeglied
- 208: zweites Getriebeglied
- 209: drittes Getriebeglied
- 210: viertes Getriebeglied
- 211: erste Gelenkverbindung
- 212: zweite Gelenkverbindung
- 213: Dämpfer
- 214: erstes Ringgelenk
- 215: zweites Ringgelenk
- 216: Ausschubkraft
- 217: erste Aufnahme bzw. erstes Drehlager
- 218: zweite Aufnahme bzw. zweites Drehlager
- 219: dritte Aufnahme bzw. drittes Drehlager
- 220: vierte Aufnahme bzw. viertes Drehlager
- 221: Schwingrichtung
- 222: Fahrzeuglängsrichtung
- 223: Fahrzeugbreitenrichtung
- 224: Ebene
- 225: Vorderseite
- 226: Hinterseite
- 227: Ruhelage
- 229: Gehäuse
- 230: Schubstange
- 231: vordere Auslenklage
- 232: hintere Auslenklage
- 233: vorderer Auslenk- bzw. Federweg
- 234: hinterer Auslenk- bzw. Federweg
- 235: Nulllinienlage
- 260: erste Knickstelle
- 261: zweite Knickstelle
- 262: Endbereich
- 263: erstes Lager
- 264: zweites Lager
- 265: linke Kreisbogenbahn
- 266: rechte Kreisbogenbahn

- 301: Fahrzeugschwingungsvorrichtung
- 302: Getriebe
- 304: Hebelwerk
- 305: erste Schubschwinge
- 306: zweite Schubschwinge
- 307: erstes Getriebeglied
- 308: zweites Getriebeglied
- 309: drittes Getriebeglied
- 310: viertes Getriebeglied
- 311: erste Gelenkverbindung
- 312: zweite Gelenkverbindung
- 313: Dämpfer
- 314: erstes Ringgelenk
- 315: zweites Ringgelenk
- 316: Ausschubkraft
- 317: erste Aufnahme bzw. erstes Drehlager
- 318: zweite Aufnahme bzw. zweites Drehlager
- 319: dritte Aufnahme bzw. drittes Drehlager
- 320: vierte Aufnahme bzw. viertes Drehlager
- 321: Schwingrichtung
- 322: Fahrzeuglängsrichtung
- 323: Fahrzeugbreitenrichtung
- 324: Ebene
- 327: Ruhelage
- 328: Volllinienmodel
- 331: vordere Auslenklage
- 332: hintere Auslenklage
- 333: vorderer Auslenk- bzw. Federweg
- 334: hinterer Auslenk- bzw. Federweg
- 335: Nulllinienlage
- 336: gestricheltes Linienmodel
- 337: gestricheltes Linienmodel
- 363: erstes Lager
- 364: zweites Lager
- 365: linke Kreisbogenbahn
- 366: rechte Kreisbogenbahn

- 401: Fahrzeugschwingungsvorrichtung
- 402: Getriebe
- 404: Hebelwerk
- 405: Schubschwinge
- 407: erstes Getriebeglied
- 408: zweites Getriebeglied
- 411: Gelenkverbindung
- 413: Dämpfer
- 414: erstes Ringgelenk
- 415: zweites Ringgelenk
- 416: Ausschubkraft
- 417: erste Aufnahme bzw. erstes Drehlager
- 418: zweite Aufnahme bzw. zweites Drehlager
- 419: dritte Aufnahme bzw. drittes Drehlager
- 421: Schwingrichtung
- 422: Fahrzeuglängsrichtung
- 423: Fahrzeugbreitenrichtung
- 424: Ebene
- 427: Ruhelage
- 431: vordere Auslenklage
- 432: hintere Auslenklage
- 433: vorderer Auslenk- bzw. Federweg
- 434: hinterer Auslenk- bzw. Federweg
- 435: Nulllinienlage
- 462: Endbereich
- 466: Kreisbogenbahn

- 501: Fahrzeugschwingungsvorrichtung
- 502: Getriebe
- 505: erste Schubschwinge
- 506: zweite Schubschwinge
- 507: erstes Getriebeglied
- 508: zweites Getriebeglied
- 509: drittes Getriebeglied
- 510: viertes Getriebeglied
- 513: Dämpfer
- 521: Schwingrichtung
- 522: Fahrzeuglängsrichtung
- 523: Fahrzeugbreitenrichtung
- 524: Ebene
- 527: Ruhelage
- 531: vordere Auslenklage
- 532: hintere Auslenklage
- 570: horizontal schwingbares Fahrzeugteil
- 571: Kabinenbodenbereich
- 572: Karosseriebauteil
- 573: weiteres Fahrzeugteil

- 601: Fahrzeugschwingungsvorrichtung
- 605: erste Schubschwinge
- 606: zweite Schubschwinge
- 613: Dämpfer
- 621: Schwingrichtung
- 622: Fahrzeuglängsrichtung
- 623: Fahrzeugbreitenrichtung
- 624: Ebene
- 670: horizontal schwingbares Fahrzeugteil
- 673: weiteres Fahrzeugteil
- 680: Sitzoberteil
- 681: Sitzunterteil

- 701: Fahrzeugschwingungsvorrichtung
- 701A: Horizontalschwingungseinrichtung
- 702: Getriebe
- 704: Hebelwerk
- 705: erste Schubschwinge
- 706: zweite Schubschwinge
- 707: erstes Getriebeglied
- 708: zweites Getriebeglied
- 709: drittes Getriebeglied
- 710: viertes Getriebeglied
- 711: erste Gelenkverbindung
- 712: zweite Gelenkverbindung
- 713: Dämpfer
- 714: erstes Ringgelenk
- 715: zweites Ringgelenk
- 716: Ausschubkraft
- 717: erste Aufnahme bzw. erstes Drehlager
- 718: zweite Aufnahme bzw. zweites Drehlager
- 719: dritte Aufnahme bzw. drittes Drehlager
- 720: vierte Aufnahme bzw. viertes Drehlager
- 721: Schwingrichtung
- 722: Fahrzeuglängsrichtung
- 723: Fahrzeugbreitenrichtung
- 724: Ebene
- 727: Ruhelage
- 728: Volllinienmodel
- 730: Schubstange
- 731: vordere Auslenklage
- 732: hintere Auslenklage
- 733: vorderer Auslenk- bzw. Federweg
- 734: hinterer Auslenk- bzw. Federweg
- 735: Nulllinienlage
- 763: erstes Lager
- 764: zweites Lager

## Patentansprüche

1. Fahrzeugschwingungsvorrichtung (1; 501) mit zwei relativ zueinander beweglich angeordneten Fahrzeugteilen (570, 573), bei welcher eines (570) der beiden Fahrzeugteile (570, 573) gegenüber dem weiteren (573) der beiden Fahrzeugteile (570, 573) in Fahrzeuglängsrichtung (22; 522) und/oder in Fahrzeugbreitenrichtung (23; 523) im Wesentlichen horizontal (21; 521) schwingbar gelagert ist, wobei die beiden Fahrzeugteile (570, 573) durch ein Getriebe (2; 502) mit mehr als einem Getriebeglied (7, 8, 9, 10; 507, 508, 509, 510) gelenkig miteinander gekoppelt sind und zwischen einem ersten Getriebeglied (7, 8; 507, 508) und einem der beiden Fahrzeugteile oder einem weiteren Getriebeglied (9, 10; 509, 510) ein Dämpfer (13; 513) dämpfungswirkend angeordnet ist, **dadurch gekennzeichnet, dass** der Dämpfer eine Federkomponente zum Bereitstellen einer Ausschubkraft umfasst, wobei die Federkomponente eine Gasfeder ist und dass sich der Dämpfer hinsichtlich seiner Längserstreckung in einer Ebene erstreckt, die von der Fahrzeuglängsrichtung bzw. der Fahrzeugbreitenrichtung aufgespannt wird.

2. Fahrzeugschwingungsvorrichtung (1; 401) nach Anspruch 1,
**dadurch gekennzeichnet, dass**
das Getriebe (2; 402) eine einzelne Schubschwinge (5; 405) mit zwei in Reihe geschalteten Getriebegliedern (7, 8; 407, 408) aufweist, wobei die Schubschwinge (5; 405) mittels des Dämpfers (13; 413) mit einem der beiden Fahrzeugteile, vorzugsweise mit dem im Wesentlichen horizontal schwingbaren Fahrzeugteil, gekoppelt ist.

3. Fahrzeugschwingungsvorrichtung (1) nach Anspruch 1,
**dadurch gekennzeichnet, dass**
das Getriebe (2) zwei parallel geschaltete Schubschwingen (5, 6) mit jeweils zwei in Reihe geschalteten Getriebegliedern (7, 8, 9, 10) aufweist, wobei die zwei parallel geschalteten Schubschwingen (5, 6) mittels des Dämpfers (13) miteinander gekoppelt sind.

4. Fahrzeugschwingungsvorrichtung (1) nach einem der vorhergehenden Ansprüche,
**dadurch gekennzeichnet, dass**
die Getriebeglieder (7, 8, 9, 10) einer Schubschwinge (5, 6) in einem Gelenk (11, 12) gelenkig miteinander verbunden sind und der Dämpfer (13) in dem Gelenk (11, 12) gelagert ist.

5. Fahrzeugschwingungsvorrichtung (1; 501) nach einem der vorhergehenden Ansprüche,
**dadurch gekennzeichnet, dass**
der Dämpfer (13; 513) sowohl in einer Ruheposition (27; 527) als auch in Auslenkpositionen (31, 32; 531, 532) des horizontal schwingbaren Fahrzeugteils (570) stets quer zu dessen Schwingrichtung (21; 521) ausgerichtet ist.

6. Fahrzeugsitz eines Fahrzeuges,
**dadurch gekennzeichnet, dass**
eine Fahrzeugschwingungsvorrichtung (1) nach einem der Ansprüche 1 bis 5.

7. Fahrgastzelle bzw. Fahrzeugkabine eines Fahrzeuges,
**dadurch gekennzeichnet, dass**
eine Fahrzeugschwingungsvorrichtung (1) nach einem der Ansprüche 1 bis 5.

8. Verfahren zum Positionieren eines im Wesentlichen horizontal schwingbaren Fahrzeugteils einer Fahrzeugschwingungsvorrichtung (1; 501) nach einem der Ansprüche 1-5 in einer Ruheposition (27; 527) bzw. in die Ruheposition (27; 527) hinein,
**dadurch gekennzeichnet, dass**
die Gasfeder des Dämpfers (13; 513) der Fahrzeugschwingungsvorrichtung (1; 501) das im Wesentlich horizontal schwingbare Fahrzeugteil (570) in der Ruheposition (27; 527) hält bzw. das ausgelenkte im Wesentlichen horizontal schwingbare Fahrzeugteil (570) in die Ruheposition (27; 527) hinein zurück verlagert.

9. Verwendung einer Fahrzeugschwingungsvorrichtung nach einem der Ansprüche 1-5.

## Claims

1. Vehicle oscillation device (1; 501) comprising two vehicle parts (570, 573) arranged so as to be movable relative to one another, in which one (570) of the two vehicle parts (570, 573) is mounted such that it can oscillate substantially horizontally (21; 521) relative to the other (573) of the two vehicle parts (570, 573) in vehicle longitudinal direction (22; 522) and/or in vehicle transverse direction (23; 523),
the two vehicle parts (570, 573) being hingedly interconnected by means of a transmission (2; 502) having more than one transmission element (7, 8, 9, 10; 507, 508, 509, 510) and a damper (13; 513) being arranged between a first transmission element (7, 8; 507, 508) and one of the two vehicle parts or another transmission element (9, 10; 509, 510) so as to have a damping effect, **characterised in that** the damper comprises a spring component for providing a pushing force, the spring component being a pneumatic spring, and **in that** the longitudinal extent of the damper extends in a plane which is spanned by the vehicle longitudinal direction or the vehicle transverse direction respectively.

2. Vehicle oscillation device (1; 401) according to claim 1,
**characterised in that**
the transmission (2; 402) comprises a single oscillating slider (5; 405) having two transmission elements (7, 8; 407, 408) connected in series, the oscillating slider (5; 405) being coupled to one of the two vehicle parts, preferably to the vehicle part which can oscillate substantially horizontally, by means of the damper (13; 413).

3. Vehicle oscillation device (1) according to claim 1,
**characterised in that**
the transmission (2) comprises two oscillating sliders (5, 6) which are connected in parallel and each comprise two transmission elements (7, 8, 9, 10) connected in series, the two oscillating sliders (5, 6) connected in parallel being coupled to one another by means of the damper (13).

4. Vehicle oscillation device (1) according to any of the preceding claims, **characterised in that**
the transmission elements (7, 8, 9, 10) of an oscillating slider (5, 6) are hingedly interconnected in a joint (11, 12), and the damper (13) is mounted in the joint (11, 12).

5. Vehicle oscillation device (1; 501) according to any of the preceding claims,
**characterised in that**
the damper (13; 513) in a rest position (27; 527) as well as in deflected positions (31, 32, 531, 532) of the vehicle part (570) which can oscillate horizontally is always oriented transversely to the oscillation direction (21; 521) of said vehicle part.

6. Vehicle seat for a vehicle,
**characterised by**
a vehicle oscillation device (1) according to any of claims 1 to 5.

7. Passenger compartment or vehicle cab of a vehicle respectively,
**characterised by**
a vehicle oscillation device (1) according to any of claims 1 to 5.

8. Method for positioning a vehicle part, which can oscillate substantially horizontally, of a vehicle oscillation device (1; 501) according to any of claims 1 to 5 in a rest position (27; 527) or for moving said part into the rest position (27; 527) respectively,
**characterised in that**
the pneumatic spring of the damper (13; 513) of the vehicle oscillation device (1; 501) holds the vehicle part (570), which can oscillate substantially horizontally, in the rest position (27; 527) or moves the deflected vehicle part (570), which can oscillate substantially horizontally, back into the rest position (27; 527) respectively.

9. Use of a vehicle oscillation device according to any of claims 1 to 5.

## Revendications

1. Dispositif de mouvement vacillant pour des véhicules (1 ; 501) comportant deux parties de véhicule (570, 573) disposées de manière mobile l'une par rapport à l'autre, dans lequel dispositif l'une (570) des deux parties de véhicule (570, 573) est montée de manière à pouvoir vaciller par rapport à l'autre (573) des deux parties de véhicule (570, 573) dans le sens longitudinal du véhicule (22 ; 522) et/ou dans le sens de la largeur du véhicule (23 ; 523), pour l'essentiel dans le sens horizontal (21; 521),
les deux parties de véhicule (570, 573) étant couplées l'une à l'autre de manière articulée par un système de transmission (2 ; 502) comportant plus d'un organe de transmission (7, 8, 9, 10 ; 507, 508, 509, 510), et un amortisseur (13 ; 513) étant disposé entre un premier organe de transmission (7, 8 ; 507, 508) et l'une des deux parties de véhicule ou un autre organe de transmission (9, 10 ; 509, 510) pour exercer une action d'amortissement,
**caractérisé en ce que** ledit amortisseur comporte un composant ressort pour mettre à disposition une force d'extraction, le composant ressort étant un ressort pneumatique et **en ce que** ledit amortisseur s'étend dans le sens longitudinal dans un plan qui est définit par le sens longitudinal du véhicule ou/et le sens de la largeur du véhicule réspectivement.

2. Dispositif de mouvement vacillant pour des véhicules (1 ; 401) selon la revendication 1, **caractérisé en ce que** le système de transmission (2 ; 502) comporte une seule bielle de poussée (5 ; 405) avec deux organes de transmission (7, 8 ; 407, 408) montés en série, la bielle de poussée (5 ; 405) étant couplée, par l'intermédiaire de l' amortisseur (13 ; 413), à l'une des deux parties de véhicule, de préférence à la partie de véhicule vacillant sensiblement dans le sens horizontal.

3. Dispositif de mouvement vacillant pour des véhicules (1) selon la revendication 1, **caractérisé en ce que** le système de transmission (2) comporte deux bielles de poussée (5, 6) montées en parallèle, ayant chacune deux organes de transmission (7, 8, 9, 10) montés en série, les deux bielles de poussée (5, 6) montées en parallèle étant couplées l'une à l'autre au moyen de l'amortisseur (13).

4. Dispositif de mouvement vacillant pour des véhicules (1) selon l'une quelconque des revendications précédentes, **caractérisé en ce que** les organes de transmission (7, 8, 9, 10) d'une bielle de poussée (5, 6) sont reliés entre eux de manière articulée dans une articulation (11, 12) et l'amortisseur (13) est monté dans ladite articulation (11, 12).

5. Dispositif de mouvement vacillant pour des véhicules (1 ; 501) selon l'une quelconque des revendications précédentes, **caractérisé en ce que**, tant dans une position de repos (27 ; 527) que dans des positions de déviation (31, 32 ; 531, 532) de la partie de véhicule (570) horizontalement vacillante, l'amortisseur (13 ; 513) est toujours orienté transversalement au sens de mouvement vacillant (21 ; 521) de celle-ci.

6. Siège de véhicule pour un véhicule, **caractérisé par** un dispositif de mouvement vacillant pour véhicule (1) selon l'une des revendications 1 à 5.

7. Habitacle de passagers ou cabine de véhicule pour un véhicule, **caractérisé par** un dispositif de mouvement vacillant pour véhicule (1) selon l'une des revendications 1 à 5.

8. Procédé permettant de positionner une partie de véhicule d'un dispositif de mouvement vacillant pour véhicule (1 ; 501) selon l'une des revendications 1 à 5, laquelle est apte à vasciller sensiblement dans le sens horizontal vers une position de repos (27 ; 527) ou dans la position de repos (27 ; 527) réspectivement,
**caractérisé en ce que** le ressort pneumatique de l'amortisseur (13 ; 513) du dispositif de mouvement vacillant pour des véhicules (1 ; 501) maintient la partie de véhicule (570) apte à pivoter sensiblement horizontalement ou renvoie la partie de véhicule (570) déviée, apte à pivoter sensiblement horizontalement, dans la position de repos (27 ; 527) réspectivement.

9. Utilisation d'un dispositif de mouvement vacillant pour des véhicules selon l'une des revendications 1 à 5.
